# DEMANDE DE BREVET EUROPEEN

(11) **EP 3 260 370 A1**
(43) Date de publication de la demande: **27.12.2017**
(21) Numéro de dépôt: 17176471.5
(22) Date de dépôt: 16.06.2017
(51) Int. Cl.: B64C 29/00, A63H 27/00

(54) **DRONE COMPORTANT DES AILES PORTANTES**

(30) Priorité: 20.06.2016 FR 1655738
(71) Demandeur: Parrot Drones, 75010 Paris (FR)
(72) Inventeur: LAVAGEN, Gauthier, 93110 Rosny Sous-Bois (FR); MARI-MARI, Marc, 75018 Paris (FR); BENATAR, Yoni, 93260 Les Lilas (FR); BARSE, Thomas, 78100 Saint-Germain-en-Laye (FR)
(74) Mandataire: Dupuis-Latour, Dominique

(57) **Abrégé**

L'invention concerne un drone à voilure tournante (10) comprenant un corps de drone (12) comprenant une carte électronique contrôlant le pilotage du drone, quatre bras de liaison (16) comprenant fixé solidairement un bloc propulseur (14). Les bras de liaison (16) forment des ailes portantes.

## Description

L'invention concerne les drones de loisir, notamment les drones à voilure tournante tels que les quadricoptères et analogues.

Ces drones volants comprennent un corps de drone et une pluralité de blocs propulseurs montés à l'extrémité de bras de liaison, chaque bloc propulseur étant muni d'une hélice entrainée par un moteur individuel. Les différents moteurs sont commandables de manière différenciée pour piloter le drone en attitude et en vitesse.

Un tel exemple est le *Rolling Spider* commercialisé par Parrot Drones SAS, Paris, France.

Chaque hélice exerce sur le drone une force de traction due à la portance de l'hélice, cette force de traction étant dirigée vers le haut, et un moment qui est de sens opposé à son sens de rotation. En vol stationnaire, c'est-à-dire en maintien apparemment immobile en altitude et en attitude, les quatre hélices tournent à la même vitesse et les quatre forces de portance s'ajoutent et compensent le poids du drone. En ce qui concerne les moments des hélices, ces derniers s'annulent du fait des sens de rotation opposés des hélices.

Ce drone peut en particulier être muni d'un accessoire constitué par un arbre pourvu à chacune de ses extrémités d'une roue de grand diamètre. Cette configuration permet en particulier de faire non seulement voler le drone mais également muni de roues, de faire rouler ce drone au sol, le long d'un mur, contre un plafond, etc., en multipliant ainsi les possibilités d'évolution, en plus des habituelles configurations de vol libre et de sustentation du drone.

Toutefois, ce type de drone est limité dans son application, puisqu'il permet soit un vol quadricoptère c'est-à-dire à voilure tournante, soit lorsqu'il est muni d'accessoires, d'avoir un déplacement roulant.

Il est connu dans le domaine des modèles réduits, un certain nombre de dispositifs volants, de type avion, qui permettent non pas un vol par sustentation et propulsion par une voilure tournante, mais un vol assuré par un propulseur et dont la portance est assurée par les ailes portantes dudit avion. Les avions sont donc considérés comme des appareils à voilure fixe.

Toutefois, il est observé que ces modèles réduits présentent des difficultés de pilotage et font souvent l'objet de chutes dommageables au modèle réduit.

Le but de l'invention est de proposer un drone à voilure tournante permettant à un tel drone de voler non seulement en utilisant la portance des surfaces de rotation, à savoir la voilure tournante, mais également de voler tel qu'un avion en utilisant une voilure fixe, tout en bénéficiant du contrôle aisé qu'offrent les drones aujourd'hui.

A cet effet, l'invention propose un drone à voilure tournante comprenant un corps de drone comprenant une carte électronique contrôlant le pilotage du drone, quatre bras de liaison comprenant fixé solidairement un bloc propulseur, les bras de liaison formant des ailes portantes.

De façon caractéristique, le drone comprend des moyens de conversion de vol permettant au drone, après décollage, d'effectuer une conversion de sorte à voler en utilisant la portance des quatre ailes.

Selon diverses caractéristiques subsidiaires, prises isolément ou en combinaison :
- les blocs propulseurs sont fixés à l'extrémité des ailes portantes.
- les quatre blocs propulseurs forment un angle d'inclinaison par rapport au plan médian horizontal du corps du drone lorsque le drone est en position de vol avion, les blocs propulseurs situés de part et d'autre du corps de drone au-dessus du plan médian horizontal du corps de drone lorsque le drone est en position de vol avion, sont inclinés respectivement vers les blocs propulseurs situés du même côté du corps de drone en dessous dudit plan médian horizontal selon un angle d'inclinaison vertical prédéterminé positif et les blocs propulseurs situés de part et d'autre du corps de drone en-dessous dudit plan médian horizontal sont inclinés respectivement vers les blocs propulseurs situés du même côté du corps de drone au-dessus du plan médian horizontal selon angle d'inclinaison vertical prédéterminé négatif symétrique.
- les angles d'inclinaison prédéterminés sont identiques en valeur absolue.
- les angles d'inclinaison prédéterminés sont compris entre 10 et 30° en valeur absolue.
- les ailes portantes positionnées respectivement de chaque côté du corps de drone défini par le plan médian horizontal sont symétriques.
- les ailes portantes ont une forme de dièdre.
- les ailes portantes sont formées de deux parties, une première partie horizontale lorsque le drone est en position de vol avion et une partie réalisant une jonction entre la partie d'aile horizontale et le corps de drone.
- les ailes portantes positionnées respectivement de chaque côté du corps de drone sont reliées entre elles par au moins un moyen de renfort.
- le moyen de renfort est fixé sensiblement à proximité des blocs propulseurs.
- les ailes portantes forment un angle de flèche par rapport au corps de drone.
- le corps de drone est de forme allongée, et est sensiblement perpendiculaire au plan des hélices.
- le corps du drone comprend un capteur ultrason et/ou un capteur caméra dirigés sensiblement perpendiculairement au plan des hélices.
- le drone est dépourvu de gouverne de direction.
- au moins une aile du drone comprend au moins un moyen de rigidification sur au moins une partie de la périphérie de l'aile.
- ledit au moins un moyen de rigidification est au moins en partie sur l'extrémité distale et/ou le bord de fuite de ladite au moins une aile.
- ledit au moins un moyen de rigidification est au moins sur la section de jonction entre l'extrémité distale et le bord de fuite de ladite au moins une aile.
- ledit au moins un moyen de rigidification est au moins en partie sur l'extrémité distale de ladite au moins une aile et se prolonge au-delà de ladite extrémité distale pour former un élément de support du drone.
- chacune des ailes du drone comprend ledit moyen de rigidification.

On va maintenant décrire un exemple de mise en oeuvre de la présente invention, en référence aux dessins annexés.
La Figure 1 est une vue d'ensemble montrant le drone objet de l'invention vu du dessus lorsque le drone est au sol.
La Figure 2 est une vue de côté du drone conformément à l'invention lorsque le drone est en vol en utilisant la portance des ailes.
La Figure 3 est une vue de dessus du drone conformément à l'invention lorsque le drone est en vol en utilisant la portance des ailes.
La Figure 4 illustre une vue arrière du drone conformément à l'invention lorsque le drone est en vol en utilisant la portance des ailes.
La Figure 5 illustre un mode de réalisation particulier du drone conformément à l'invention.
La Figure 6 illustre un autre mode de réalisation particulier du drone conformément à l'invention.

Nous allons maintenant décrire un exemple de réalisation de l'invention.

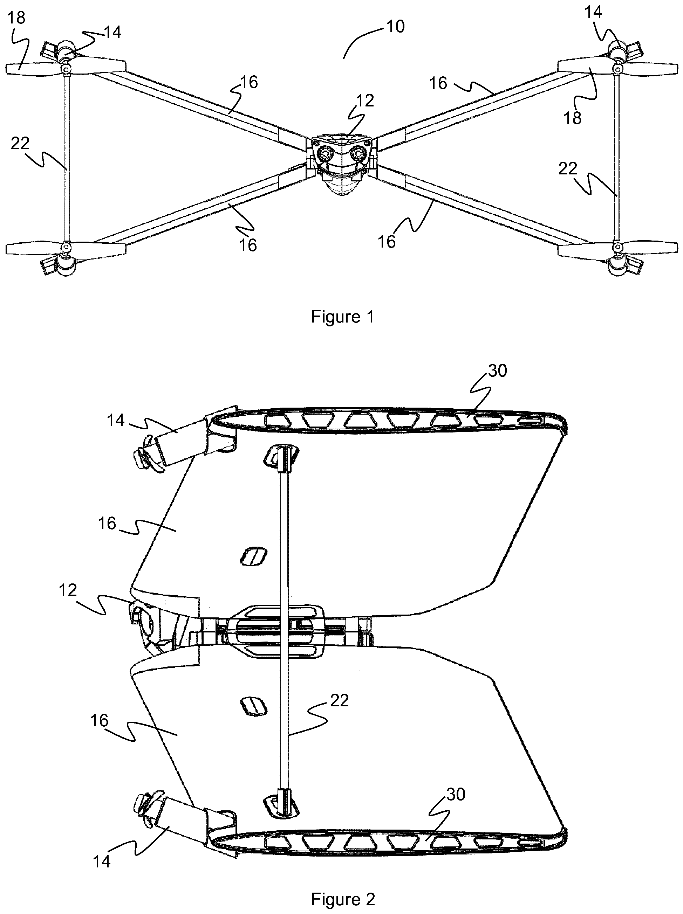

Sur la Figure 1, la référence 10 désigne de façon générale un drone à voilure tournante. Selon l'exemple illustré en Figure 1, il s'agit d'un drone de type quadricoptère dérivé du modèle *Rolling Spider* commercialisé par Parrot Drones SAS, Paris, France.

Le drone quadricoptère comporte un corps de drone 12 et quatre blocs propulseurs 14 fixés solidairement respectivement aux quatre bras de liaison 16. Les blocs propulseurs 14 sont pilotés indépendamment par un système intégré de navigation et de contrôle d'attitude. Chaque bloc propulseur 14 est muni d'une hélice 18 entrainée par un moteur individuel. Les différents moteurs sont commandables de manière différenciée pour piloter le drone en attitude et en vitesse et avec production d'une force ascensionnelle.

Les hélices 18 de deux blocs propulseurs tournent dans le sens horaire et les hélices des deux autres blocs propulseurs tournent dans le sens anti-horaire. Les blocs propulseurs munis d'hélices tournant dans le même sens de rotation sont placés sur la même diagonale.

De façon caractéristique de l'invention, les quatre bras de liaison 16 forment des ailes portantes, sensiblement perpendiculaires au plan des hélices, permettant au drone d'assurer un vol soit en voilure tournante soit un vol appelé en vol avion, de manière à bénéficier de la portance des ailes portantes.

Selon un mode de réalisation particulier, les blocs propulseurs sont fixés sensiblement à l'extrémité des ailes portantes tel qu'illustré en figure 1.

De manière alternative, les blocs propulseurs peuvent être fixés sur quasiment toute la longueur des ailes portantes, notamment au niveau du bord d'attaque de chacune des ailes, toutefois une distance minimale entre deux blocs propulseurs voisins est à respecter, cette distance ne devant pas être inférieure à la somme des rayons des deux hélices desdits blocs propulseurs voisins.

Selon un mode de réalisation particulier, le drone comprend des moyens de conversion de vol permettant au drone, après décollage en mode quadricoptère, c'est-à-dire en utilisant la portance des surfaces de rotation, d'effectuer une conversion de sorte que le drone vole en utilisant la portance des ailes, et notamment la trainée de ailes dudit drone.

Pour ce faire, le drone effectue une conversion d'un angle donné, à savoir d'un angle compris par exemple de 20° à 90°, et de manière préférentielle un angle compris entre 20° et 80° de sorte que le drone bénéficie de la portance des quatre ailes pour voler. Ainsi, le drone est apte à voler classiquement en utilisant la portance des surface de rotation ou tel qu'un avion en utilisant la portance des ailes. Un tel drone présente l'avantage d'être apte à voler comme un avion mais permet un bon contrôle de la vitesse de vol puisqu'il est aussi apte à voler très lentement notamment si l'angle de conversion est un angle faible.

Ainsi, l'utilisateur du drone, objet de la présente invention, peut selon son souhait faire voler le drone à voilure tournante de manière classique ou faire voler le drone tel un avion, tout en bénéficiant du pilotage aisé que permet le drone aujourd'hui.

Si l'on définit le drone avant décollage selon les trois axes orthogonaux X, Y et Z alors il sera appelé :
- axe X, l'axe de roulis qui est défini par le fait qu'une rotation du drone sur cet axe permet de faire déplacer le drone vers la droite ou vers la gauche,
- axe Y, l'axe de tangage qui est défini par le fait qu'une rotation du drone sur cet axe permet de faire avancer ou reculer le drone, et
- axe Z, axe de cap ou axe de lacet, qui est défini par le fait qu'une rotation du drone sur cet axe a pour effet de faire pivoter vers la droite ou vers la gauche l'axe principal du drone, donc la direction de progression du drone.

Ainsi, la conversion peut être définie par le fait que l'axe Z du drone, correspondant à l'axe de lacet lors du vol du drone en mode classique, c'est-à-dire en utilisant la portance de la voilure tournante, devient l'axe de roulis lorsque drone passe en mode de vol avion, c'est-à-dire en utilisant la voilure fixe, autrement dit la portance des quatre ailes.

Le drone illustré en figure 1 comprend quatre bras de liaison sous forme d'ailes portantes, toutefois, un tel drone pourrait comporter plus de quatre ailes portantes.

Selon un mode de réalisation particulier, le corps de drone 12 est de forme par exemple allongée. Selon ce mode de réalisation, les ailes portantes du drone sont fixées sur tout ou partie de la longueur du corps de drone.

Le drone illustré en figure 1 est tel que les ailes portantes 16 sont positionnées respectivement de chaque côté du corps de drone défini par le plan médian horizontal du corps de drone 12 lorsque le drone est en position de vol avion et les ailes portantes sont symétriques et forment par exemple un dièdre.

Selon un autre mode de réalisation, les ailes portantes de part et d'autre du corps de drone peuvent ne pas être symétriques par rapport audit plan médian horizontal du corps de drone.

Il est observé également que le drone illustré en figure 1 est tel que les ailes portantes 16 situées de chaque côté du drone par rapport au plan médian vertical 12 lorsque le drone est en position de vol avion et les ailes portantes sont symétriques.

Selon un autre mode de réalisation, les ailes portantes de part et d'autre du corps de drone peuvent ne pas être symétriques par rapport audit plan médian vertical du corps de drone.

La structure du drone telle qu'illustrée en figure 1 présente une forme de X ayant un angle de dièdre positif sur les ailes supérieures par rapport au plan médian horizontal du corps de drone lorsque le drone est en position de vol avion et un angle de dièdre négatif de même valeur sur les ailes inférieures par rapport audit plan médian horizontal. Toutefois, le drone peut comprendre des angles de dièdres positif et négatif de valeurs différentes.

Par exemple, l'angle de dièdre positif sur les ailes supérieures est compris entre 15 et 25° et de préférence 20°. De même, selon le drone illustré, l'angle de dièdre négatif sur les ailes inférieures est compris entre 15° et 25° et de préférence 20°.

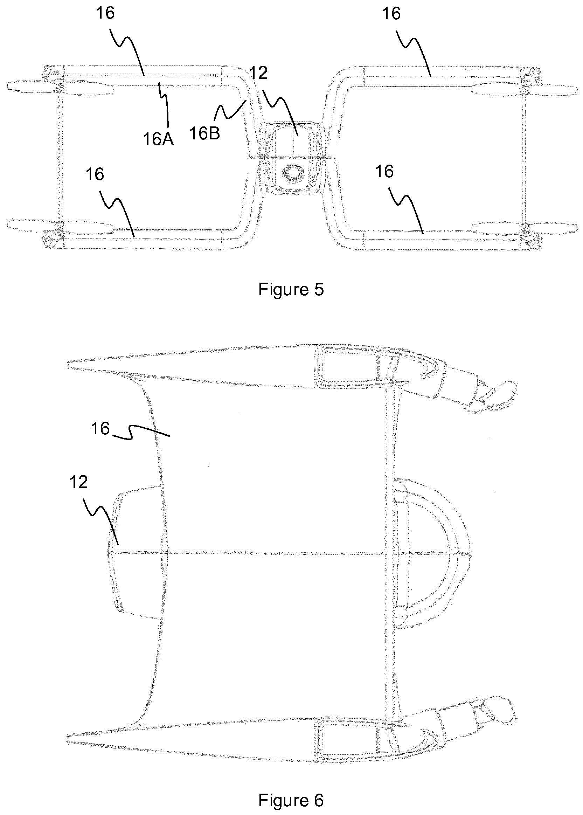

Selon un mode de réalisation particulier notamment illustré en figure 6, la structure du drone est telle que l'angle de dièdre est nul.

Tel qu'il peut être observé sur la figure 1, les ailes portantes présentent une envergure telle que le bras de levier permet un vol stable en mode avion. Selon l'exemple illustré en figure 1, l'envergure est de 30 cm.

En outre, les ailes portantes présentent une surface de portance appropriée de sorte à permettre au drone de voler en mode avion en utilisant la portance des quatre ailes. La surface des ailes est déterminée de telle sorte à offrir une bonne portance sans impacter de façon majeure les performances de vol du drone en vol classique.

Les ailes portantes sont par exemple en polystyrène, en polypropylène (PP) ou en polypropylène expansé (PPE) ou autre type de polyoléfine pouvant être expansée.

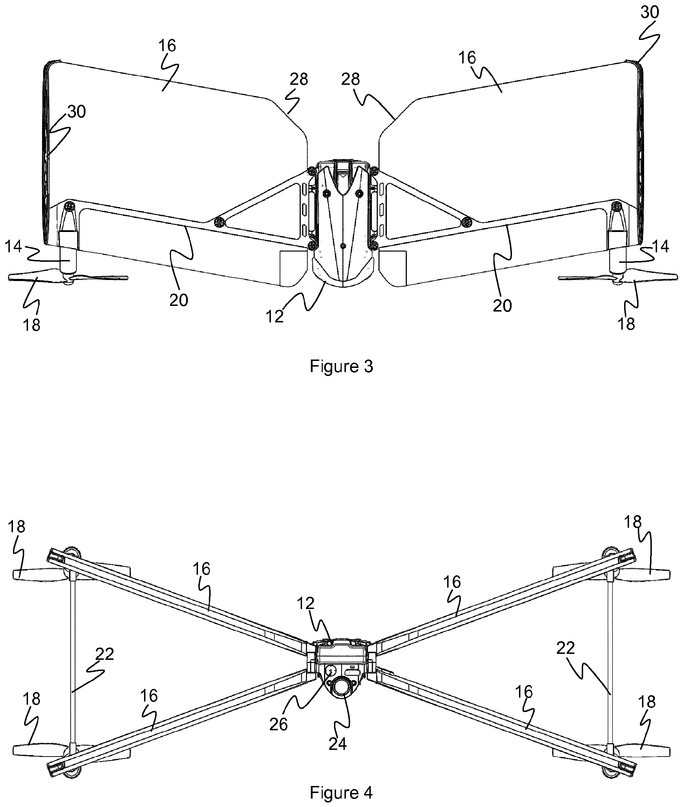

Tel qu'illustré en figure 3, chaque aile portante peut comprendre au moins un élément structurel 20 inséré dans l'aile portante. Cet élément structurel 20 peut être plus ou moins souple en fonction des besoins de rigidification de l'aile. L'élément structurel peut permettre la circulation du/des câble(s) électrique(s) connectant le corps de drone et le bloc propulseur afin d'alimenter électriquement le bloc propulseur.

L'élément structurel 20 peut être composé par exemple d'une ou plusieurs tiges creuses, par exemple de forme carrée ou ronde, et être en matière plastique ou en matière carbone pour rigidifier l'aile portante.

En l'absence d'un tel élément structurel inséré dans l'aile portante, une rainure peut être prévue dans chacune des ailes de sorte à permettre la circulation du/des câble(s) électrique(s) connectant le corps de drone et le bloc propulseur afin d'alimenter électriquement le bloc propulseur.

Les ailes portantes sont fixées rigidement au corps de drone, soit directement, soit indirectement. Par exemple, les ailes portantes peuvent être collées par un adhésif fort au corps de drone ou peuvent être maintenues fermement par un mécanisme de maintien, par exemple, une pince.

Tel qu'illustré en Figure 2, les ailes portantes 16 du drone forment un angle de flèche α par rapport au corps de drone 12, l'angle de flèche α peut être compris entre 5° et 20° et de préférence d'environ 10°.

Selon un mode de réalisation particulier, chacun des blocs propulseurs (hors hélices) du drone est dans le même plan que l'aile sur lequel il est fixé. Autrement dit, chacune des hélices des blocs propulseurs est sur un plan sensiblement perpendiculaire au plan de la surface portante de l'aile sur laquelle l'hélice est fixée.

Toutefois, selon l'exemple de réalisation illustré en figure 1 et en figure 4, les quatre blocs propulseurs forment un angle d'inclinaison par rapport au plan médian horizontal du corps de drone, les deux blocs propulseurs positionnés d'un côté du corps de drone sont inclinés l'un vers l'autre respectivement selon un angle d'inclinaison vertical prédéterminé positif et un angle d'inclinaison vertical prédéterminé négatif. Et symétriquement, les deux blocs propulseurs positionnés de l'autre côté du corps de drone sont inclinés l'un vers l'autre respectivement selon le même angle d'inclinaison prédéterminé vertical positif et le même angle d'inclinaison prédéterminé vertical négatif.

En d'autres termes, les blocs propulseurs situés de part et d'autre du corps de drone au-dessus du plan médian horizontal du corps de drone lorsque le drone est en position de vol avion, sont inclinés respectivement vers les blocs propulseurs situés du même côté du corps de drone en dessous dudit plan médian horizontal selon un angle d'inclinaison vertical prédéterminé positif, et vice versa. Les blocs propulseurs situés de part et d'autre du corps de drone en-dessous dudit plan médian horizontal sont notamment inclinés respectivement vers les blocs propulseurs situés du même côté du corps de drone au-dessus du plan médian horizontal selon angle d'inclinaison vertical prédéterminé négatif symétrique.

L'inclinaison des blocs propulseurs permet en mode avion de créer une composante horizontale de traction perpendiculaire à la direction d'avancement qui contribue à augmenter le couple disponible sur l'axe de lacet du drone, qui sinon résulterait uniquement par le couple des hélices du drone. Cette augmentation de couple peut présenter un avantage pour le vol en mode avion, c'est-à-dire en utilisant la portance des ailes du drone. En effet, l'augmentation de couple permet de compenser l'inertie de déplacement du drone sur l'axe de lacet en mode avion, qui est beaucoup plus élevée que sur un drone classique, c'est-à-dire sans ailes portantes, du fait de la présence d'ailes portantes.

L'inclinaison des moteurs entraine une diminution de la portance générée puisqu'une partie de la traction produite par les moteurs est appliquée sur le plan horizontal. Toutefois, une telle inclinaison créant une composante horizontale de traction permet de contribuer à augmenter le contrôle du drone sur l'axe de lacet en mode avion puisque l'application d'une force horizontale sur le bras de levier existant entre les moteurs et le centre de gravité du drone, optimisé par le placement des blocs propulseurs sensiblement sur les extrémités des ailes, permet de créer un couple sur l'axe de lacet qui viendra s'ajouter au couple des hélices.

La traction nécessaire pour que le drone puisse voler en mode avion, c'est-à-dire en utilisant la portance des ailes, est inférieure à la traction nécessaire pour permettre au drone dans sa configuration de vol classique de maintenir un point fixe, c'est-à-dire un vol stationnaire.

En outre, il est à noter que l'axe Z du drone, correspondant à l'axe de lacet lorsque le drone vole en mode classique, c'est-à-dire en utilisant la voilure tournante, devient l'axe de roulis lorsque le drone vole en mode avion, c'est-à-dire sensiblement horizontalement en utilisant la portance des ailes.

Selon un mode de réalisation particulier, les angles d'inclinaison prédéterminés des quatre blocs propulseurs sont identiques en valeur absolue. Toutefois, selon un autre mode de réalisation, les blocs propulseurs situés au-dessus du plan médian horizontal du corps de drone lorsque le drone est en position de vol avion, peuvent avoir un angle d'inclinaison en valeur absolue différent des angles d'inclinaison des blocs propulseurs situés au-dessous dudit plan médian horizontal.

Selon un mode de réalisation particulier, les angles d'inclinaison prédéterminés sont compris entre 10° et 30°, et de préférence d'environ 20°.

Il a été observé qu'un angle d'inclinaison de 20° en valeur absolue appliqué aux blocs propulseurs a pour conséquence des pertes de traction d'environ 6%. En outre, la circulation du flux d'air autour des ailes quand les moteurs tournent a pour conséquence une augmentation des pertes de traction du fait de l'inclinaison des blocs propulseurs. Ainsi selon ce mode de réalisation, les pertes de traction sont d'environ 24%.

Selon un mode de réalisation particulier, les blocs propulseurs peuvent être sensiblement inclinés en convergeant sur l'axe médian principal du drone et donc avoir une valeur d'angle d'inclinaison par rapport au plan médian vertical du corps de drone lorsque le drone est en position de vol avion.

Le drone illustré en figures 1, 2 et 3 comprend quatre ailes portantes fixées sur le corps de drone, chaque aile ayant une forme de parallélogramme.

Toutefois, d'autres formes d'ailes peuvent être envisagées.

Notamment tel qu'illustré en figure 5, les ailes portantes peuvent être formées de deux parties 16A et 16B, une première partie 16A sensiblement horizontale au plan médian horizontal du corps de drone lorsque le drone est en position de vol avion et une partie 16B réalisant une jonction entre la partie d'aile sensiblement horizontale et le corps de drone.

Selon encore un autre mode de réalisation illustré en figure 6, les deux bras de liaison situées sur la face supérieure du corps de drone 12 forment une aile unique, c'est-à-dire une première aile avec un extrados sans discontinuité et les deux bras de liaison sur la face inférieure du corps de drone 12 forment aussi une aile unique, c'est-à-dire une seconde aile avec un extrados sans discontinuité.

Les ailes portantes 16 peuvent être reliées entre elles deux à deux par au moins un moyen de renfort 22.

Selon un mode de réalisation particulier, les ailes portantes situées d'un même côté du plan médian vertical du corps de drone lorsque le drone est en position de vol avion, sont reliées entre elles par au moins un moyen de renfort 22. La figure 1 illustre un mode de réalisation dans lequel un unique moyen de renfort est fixé entre les ailes portantes d'un même côté du drone.

Les moyens de renfort sont réalisés par exemple en carbone et sont fermement fixés de part et d'autre du moyen de renfort respectivement à deux ailes portantes distinctes.

Selon un mode de réalisation particulier, le moyen de renfort 22 est fixé sensiblement à proximité des blocs propulseurs.

Le corps du drone 12 peut comprendre en outre un capteur ultrason 24 et/ou un capteur caméra 26 dirigés perpendiculairement au plan des hélices. Ces capteurs ont pour fonction de mesurer lors du vol en mode classique du drone, c'est-à-dire en voilure tournante, l'altitude du drone par rapport au sol. Le capteur ultrason comporte par exemple, un transducteur électro-acoustique permettant l'émission et la réception d'ultrasons. Ce transducteur émet une brève salve d'ultrasons de quelques dizaines ou centaines de microsecondes, puis attend le retour de l'écho acoustique envoyé après réflexion sur le sol. Le laps de temps séparant l'émission de la salve de la réception de l'écho permet, connaissant la vitesse du son, d'estimer la longueur du chemin acoustique parcouru et donc d'évaluer la distance séparant le drone de la surface réfléchissante. Dans la mesure où le faisceau du capteur ultrason est relativement large (typiquement un cône de 55° d'ouverture environ) et que les ailes portantes sont relativement larges et dépassent significativement l'arrière du corps de drone, les ailes portantes réduisent le cône d'émission et réception des ultrasons et perturbent les ultrasons.

Afin d'améliorer la détermination de l'altitude du drone par rapport au sol, une partie des ailes 28 situées à proximité de la partie arrière du corps de drone est sectionnée de sorte à évaser l'espace situé à l'arrière du corps de drone et respecter le cône du faisceau du capteur ultrason, tel qu'illustré en figure 3.

Selon un mode de réalisation particulier, le drone peut être dépourvu de gouverne de direction telle que des gouvernes de type ailerons se déplaçant et servant notamment à piloter le drone selon ses trois axes à savoir, tangage, roulis et lacet. Dans ce cas, le pilotage en mode avion est réalisé par l'envoi de commandes spécifiques à chaque bloc propulseur du drone.

Le drone au sol prend appui sur la surface du sol via les ailes du drone, notamment via le bord de fuite des ailes et/ou la jonction entre le bord de fuite et l'extrémité distale des ailes.

Il est observé que des atterrissages successifs du drone peuvent endommager les ailes du drone.

Afin de protéger les ailes, et selon un mode de réalisation particulier, une ou plusieurs ailes du drone, voire l'ensemble des ailes du drone, peuvent comprendre au moins un moyen de rigidification 30 sur au moins une partie de la périphérie de l'aile de sorte que les atterrissages successifs n'endommagent pas les ailes du drone.

Il est maintenant décrit de manière détaillée une aile de drone comprenant au moins un moyen de rigidification. Toutefois, conformément à l'invention, une ou plusieurs ailes, voire toutes les ailes du drone peuvent être conçues telles que décrit ci-dessous.

Selon un mode de réalisation, le moyen de rigidification 30 est positionné par exemple au moins en partie sur l'extrémité distale et/ou sur le bord de fuite de l'aile tel qu'illustré en Figure 3.

Ainsi, le moyen de rigidification peut être positionné sur au moins une partie de la longueur de l'extrémité distale de l'aile. De manière complémentaire ou alternative, le moyen de rigidification peut être positionné sur au moins une partie de la longueur du bord de fuite de l'aile.

De manière alternative, l'aile peut comprendre un premier moyen de rigidification positionné sur au moins une partie de la longueur de l'extrémité distale de l'aile et un deuxième moyen de rigidification sur au moins une partie de la longueur du bord de fuite de l'aile.

Dans le cas d'un mode de réalisation du drone comprenant des ailes trapézoïdales en forme de flèche, le drone au sol prend appui sur la section de jonction entre l'extrémité distale et le bord de fuite des ailes. Selon ce mode de réalisation, le moyen de rigidification peut être au moins sur la section de jonction entre l'extrémité distale et le bord de fuite de l'aile de sorte à éviter toute déformation de cette extrémité de l'aile après plusieurs atterrissages.

Selon un mode de réalisation particulier, le moyen de rigidification est au moins en partie sur l'extrémité distale de l'aile et se prolonge au-delà de l'extrémité distale pour former un élément de support du drone.

Selon ce mode de réalisation particulier, il est formé un ensemble de pieds aux extrémités des ailes à la jonction entre l'extrémité distale et le bord de fuite des ailes dans le prolongement de l'extrémité distale permettant un atterrissage du drone sur lesdits pieds et donc évitant toute déformation des ailes.

Afin de protéger les ailes du drone en cas de choc frontal, le bord d'attaque d'une ou plusieurs ailes du drone peut comprendre un moyen de rigidification sur tout ou partie de la longueur du bord d'attaque de l'aile.

Les moyens de rigidification sont réalisés à partir d'un matériel relativement rigide, par exemple en plastique, notamment en polypropylène ou en polypropylène expansé haute densité.

## Revendications

1. Drone à voilure tournante (10) comprenant
- un corps de drone (12) comprenant une carte électronique contrôlant le pilotage du drone,
- quatre bras de liaison (16) comprenant fixé solidairement un bloc propulseur (14),
les quatre bras de liaison (16) formant des ailes portantes, **caractérisé en ce que** le drone comprend des moyens de conversion de vol permettant au drone, après décollage, d'effectuer une conversion de sorte à voler en utilisant la portance des quatre ailes.

2. Drone à voilure tournante selon la revendication précédente, **caractérisé en ce que** les blocs propulseurs sont fixés à l'extrémité des ailes portantes.

3. Drone à voilure tournante selon l'une quelconque des revendications précédentes, **caractérisé en ce que**
- les quatre blocs propulseurs forment un angle d'inclinaison par rapport au plan médian horizontal du corps du drone lorsque le drone est en position de vol avion,
- les blocs propulseurs situés de part et d'autre du corps de drone au-dessus du plan médian horizontal du corps de drone lorsque le drone est en position de vol avion, sont inclinés respectivement vers les blocs propulseurs situés du même côté du corps de drone en dessous dudit plan médian horizontal selon un angle d'inclinaison vertical prédéterminé positif
- et les blocs propulseurs situés de part et d'autre du corps de drone en-dessous dudit plan médian horizontal sont inclinés respectivement vers les blocs propulseurs situés du même côté du corps de drone au-dessus du plan médian horizontal selon angle d'inclinaison vertical prédéterminé négatif symétrique.

4. Drone à voilure tournante selon la revendication précédente, **caractérisé en ce que** les angles d'inclinaison prédéterminés sont identiques en valeur absolue.

5. Drone à voilure tournante selon la revendication précédente, **caractérisé en ce que** les angles d'inclinaison prédéterminés sont compris entre 10 et 30° en valeur absolue.

6. Drone à voilure tournante selon l'une quelconque des revendications précédentes, **caractérisé en ce que** les ailes portantes positionnées respectivement de chaque côté du corps de drone défini par le plan médian horizontal sont symétriques.

7. Drone à voilure tournante selon la revendication précédente, **caractérisé en ce que** les ailes portantes ont une forme de dièdre.

8. Drone à voilure tournante selon l'une quelconque des revendications 1 à 5, **caractérisé en ce que** les ailes portantes sont formées de deux parties, une première partie horizontale lorsque le drone est en position de vol avion et une partie réalisant une jonction entre la partie d'aile horizontale et le corps de drone.

9. Drone à voilure tournante selon l'une quelconque des revendications précédentes, **caractérisé en ce que** les ailes portantes positionnées respectivement de chaque côté du corps de drone sont reliées entre elles par au moins un moyen de renfort (22).

10. Drone à voilure tournante selon la revendication précédente, **caractérisé en ce que** le moyen de renfort est fixé sensiblement à proximité des blocs propulseurs.

11. Drone à voilure tournante selon l'une quelconque des revendications précédentes, **caractérisé en ce que** les ailes portantes forment un angle de flèche par rapport au corps de drone.

12. Drone à voilure tournante selon l'une quelconque des revendications précédentes, **caractérisé en ce que** le corps de drone est de forme allongée, et est sensiblement perpendiculaire à un plan des hélices.

13. Drone à voilure tournante selon l'une quelconque des revendications précédentes, **caractérisé en ce que** le corps du drone comprend un capteur ultrason (24) et/ou un capteur caméra (26) dirigés sensiblement perpendiculairement à un plan des hélices.

14. Drone à voilure tournante selon l'une quelconque des revendications précédentes, **caractérisé en ce que** le drone est dépourvu de gouverne de direction.

15. Drone à voilure tournante selon l'une quelconque des revendications précédentes, **caractérisé en ce qu'**au moins une aile du drone comprend au moins un moyen de rigidification (30) sur au moins une partie de la périphérie de l'aile.

16. Drone à voilure tournante selon la revendication précédente, **caractérisé en ce que** ledit au moins un moyen de rigidification est au moins en partie sur l'extrémité distale et/ou le bord de fuite de ladite au moins une aile.

17. Drone à voilure tournante selon la revendication 15 ou la revendication 16, **caractérisé en ce que** ledit au moins un moyen de rigidification est au moins sur la section de jonction entre l'extrémité distale et le bord de fuite de ladite au moins une aile.

18. Drone à voilure tournante selon l'une des revendications 15 à 17, **caractérisé en ce que** ledit au moins un moyen de rigidification est au moins en partie sur l'extrémité distale de ladite au moins une aile et se prolonge au-delà de ladite extrémité distale pour former un élément de support du drone.

19. Drone à voilure tournante selon l'une des revendications 15 à 18, **caractérisé en ce que** chacune des ailes du drone comprend ledit moyen de rigidification.
